# EUROPÄISCHE PATENTSCHRIFT

(11) **EP 4 088 988 B1**
(45) Veröffentlichungstag und Bekanntmachung des Hinweises auf die Patenterteilung: **30.07.2025**
(21) Anmeldenummer: 22171989.1
(22) Anmeldetag: 06.05.2022
(51) Int. Cl.: B62B 9/12, B62B 7/14, B62B 7/00

(54) **QUERVERBINDUNG FÜR EINEN KINDER- ODER PUPPENWAGEN**
CROSS-CONNECTOR FOR CHILDREN'S OR DOLLS' BUGGIES
LIAISON TRANSVERSALE POUR UNE VOITURE D'ENFANT OU DE POUPÉE

(30) Priorität: 11.05.2021 DE 102021112284
(43) Veröffentlichungstag der Anmeldung: 16.11.2022
(73) Patentinhaber: Beger, Oliver, 84030 Ergolding (DE)
(72) Erfinder: Beger, Udo, 84034 Landshut (DE)
(74) Vertreter: Pröll, Jürgen

(56) Entgegenhaltungen:
- FR-A1- 2 832 374
- US-B2- 8 899 615
- US-B2- 8 905 427

## Beschreibung

Es wird eine Querverbindung für ein Wagengestell eines Kinder- oder Puppenwagens mit den Merkmalen des Oberbegriffs des Patentanspruchs 1 offenbart, wobei das Wagengestell durch die Querverbindung in seiner Breite veränderlich ausgebildet ist oder aber die Querverbindung lediglich am Wagengestell anordenbar ist.

### Hintergrund

Herkömmliche Kinder- oder Puppenwagen sind zumeist in ihrer Breite festgelegt und unveränderlich ausgebildet. Hierbei handelt es sich entweder um Einzelwagen für ein Kind bzw. eine Puppe oder um Zwillingswagen. Das Gestell der Kinder- oder Puppenwagen ist entsprechend breit ausgebildet und weist Aufnahmen für entweder einen Einsatz oder im Falle eines Zwillingswagens für zwei Einsätze auf. Eine Erweiterung eines Einzelwagens in einen Zwillingswagen kann unter Umständen erforderlich sein, bspw. durch hinzukommenden Familiennachwuchs. Umkehrt kann es auch erforderlich sein, aus einem Zwillingswagen einen Einzelwagen zu machen, z.B**.** wenn ein Kind für den Kinderwagen ausgewachsen ist. Eine Anpassung des Kinder- oder Puppenwagens ist zumeist nicht möglich. Den beschriebenen, veränderten Umständen kann daher bislang nur durch den Kauf eines Einzel- bzw. Zwillingswagen beigekommen werden. Dies stellt jedoch eine unnötige finanzielle Belastung dar und ist auch im Hinblick auf den dafür aufgebrachten Ressourceneinsatz nicht nachhaltig.

### Stand der Technik

Aus der WO 2010/047596 A2 ist ein Buggy zum Transportieren von Kindern bekannt, der einen Rahmen mit ersten Befestigungselementen zum lösbaren Befestigen einer ersten Last aufweist. Hierzu weist die erste Last eine erste Haltevorrichtung zur Aufnahme eines Kindes auf. Weiterhin ist der Rahmen mit zweiten Befestigungselementen zum lösbaren Befestigen einer zweiten Last versehen. Die Breite des Rahmens des Buggys ist zwischen einer ersten, relativ kleinen Rahmenbreite und einer zweiten, relativ große Rahmenbreite einstellbar. Die zweiten Befestigungselemente sind derart konfiguriert, dass diese sowohl in der ersten Rahmenbreite als auch in der zweiten Rahmenbreite zum lösbaren Befestigen der zweiten Last neben der ersten Last verwendbar sind. Nachteilig hierbei ist, dass die Breite des Rahmens von dem Buggy nur aufwändig veränderbar ist. Dabei ist der Rahmen mechanisch nicht auf exakt auf zwei Breiten einstellbar, so wie es für die Konfiguration von Einzelwagen und Zwillingswagen erforderlich wäre.

Aus der US 2002/0070531 A1 ist ein Joggingkinderwagen bekannt, der von einer Einzelsitzeinheit zu einer Doppelsitzeinheit erweiterbar ist. Der Joggingkinderwagen weist eine U-förmige Lenkerstangenanordnung mit einem Greifbereich mit einer darin befindlichen Trennfuge zum Öffnen und Auseinanderspreizen der Lenkerstange, einen Lenkerstangeneinsatz, der innerhalb der Trennfuge des Greifbereichs angeordnet ist, um eine breitere Lenkerstangenanordnung zur Aufnahme eines zusätzlichen Sitzes zu schaffen, auf. Weiterhin ist eine Hinterachsanordnung mit einer Achse mit gegenüberliegenden Enden vorhanden, wobei jedes Ende einen großen Luftreifen trägt und die Achse eine Trennfuge zum Öffnen und Auseinanderspreizen der Achse aufweist. Weiterhin ist ein Achseneinsatz vorhanden, der innerhalb der Trennfuge der Achse angeordnet ist, um eine breitere Hinterachsachsanordnung zu schaffen. Außerdem sind entsprechende Mittel zum Verbinden der Lenkerstangenanordnung mit der Hinterachsanordnung vorhanden. Außerdem weist der Joggingkinderwagen eine Vorderradanordnung auf, welche aus einem Vorderradrahmen, einem Gehäuse mit einer vorderen Endhülse, Mitteln zum Verbinden der Lenkerstangenanordnung mit der Vorderradanordnung und Mitteln zum Verbinden der Hinterachsanordnung mit der Vorderradanordnung besteht. Es ist eine Mittelstange mit einem rumpfwärts gelegenen Ende vorgesehen, welche mit dem Lenkerstangeneinsatz verbunden ist, und ein distales Ende, das mit der vorderen Endhülse des Gehäuses verbunden ist, um eine strukturelle Längsunterstützung für den Joggingkinderwagen bereitzustellen, wenn sich der Joggingkinderwagen im Doppelsitzmodus befindet. Schließlich ist ein Verstrebungselement vorhanden, dessen unteres Ende mit dem Achseneinsatz und dessen oberes Ende mit dem Lenkstangeneinsatz reibschlüssig verbunden ist, um eine vertikale Abstützung für den Kinderwagen im Zweisitzmodus bereitzustellen. Auch hier ist nachteilig, dass die Verstellung der Breite mechanisch anspruchsvoll gestaltet ist und nicht ohne Weiteres mit einem Handgriff erfolgen kann. Des Weiteren sind keine festen Breiten vordefiniert, sodass auch Breiten eingestellt werden können, die unvorteilhaft weder einen Einzel- noch einen Zwillingswagen ausbilden.

Aus der WO 2001/024759 A1 ist eine Gehhilfe für Personen mit eingeschränkter Gehfähigkeit bekannt, die ein erstes und ein zweites Seitenteil aufweist. Die beiden Seitenteile sind über an den zwei Seitenteilen angebrachte Querstangen verbunden, wobei die Querstangen relativ zueinander parallel bewegt werden können und so eine Einstellung des Abstands zwischen dem ersten Seitenteil und dem zweiten Seitenteil ermöglicht wird, sodass die Breite der Gehhilfe variierbar ist. Die Gehhilfe weist zusätzlich Räder und Griffstangen auf. Die Querstangen werden unter Verwendung einer durch ein Zahnrad mit einem Handgriffhebel gebildete Einstelleinrichtung gegenseitig bewegt, wobei die Einstelleinrichtung an wenigstens einer Stange an dem zweiten Seitenteil angeordnet ist. Das Zahnrad greift in Zähne ein, die an der Querstange an dem ersten Seitenteil angeordnet sind, und welche mit der Querstange mit dem Zahnrad verbunden ist. Nachteilig bei diesem Stand der Technik ist, dass lediglich eine Mechanik zur Verbreiterung angegeben ist, wobei die technische Lehre nicht ausreicht, um einen Kinder- oder Puppenwagen zu beschreiben, der in seiner Breite variierbar ist, sodass er sowohl als Einzelwagen als auch als Zwillingswagen verwendbar ist.

Die US 8 905 427 B2 beschreibt einen umwandelbaren ein- und mehrsitzigen Kinderwagen, wobei dieser wenigstens ein Fahrgestell umfasst. Das Fahrgestell wiederum umfasst eine Stützeinheit zum Tragen mindestens einer Person, typischerweise eines Kleinkindes, eine mit der Stützeinheit gekoppelte Radanordnung, ein Eingriffselement zum Verbinden des Fahrgestells mit einem anderen derartigen Fahrgestell und ein mit der Stützeinheit gekoppeltes Schwenkelement, das ein Drehen der Stützeinheit in Bezug auf das Fahrgestell ermöglicht. Die Trageinheit kann drehbar neu ausgerichtet werden, um den Transport des Fahrgestells zu ermöglichen, so dass die Trageinheit des Fahrgestells und die andere Trageinheit des anderen Fahrgestells in einem Zugzustand oder alternativ in einem Nebeneinanderzustand ausgerichtet werden können.

### Aufgabe

Es ist daher Aufgabe der vorliegenden Erfindung eine Querverbindung für ein Wagengestell eines Kinder- oder Puppenwagens bereitzustellen, welche eine Veränderung der Breite des Wagengestells durch eine Längenänderung der Querverbindung ermöglicht, sodass der Kinder- oder Puppenwagen entsprechend seiner Verwendung als Einzel- oder Zwillingswagen angepasst werden kann oder aber dass die Querverbindung an dem Wagengestell anordenbar ist, sodass, ohne das Wagengestell zu verbreitern, die Querverbindung es ermöglicht aus einem Einzelwagen eine Zwillingswagen und umgekehrt zu machen.

### Lösung

Die vorstehende Aufgabe wird mit den Merkmalen des kennzeichnenden Teils des Patentanspruchs 1 gelöst.

Der Gegenstand der nachfolgend beschrieben Erfindung ist sowohl auf Kinderwagen als auch auf Puppenwagen anwendbar. Aus diesem Grund sind beide Begriffe synonym zueinander auslegbar . Das Gleiche gilt ebenfalls, wenn nur allgemein ein Wagen, statt ein Kinder- oder Puppenwagen genannt ist.

Die vorliegenden Erfindung gemäß Patentanspruch 1 beschreibt eine Querverbindung zur variablen Breitenverstellung für ein Wagengestell eines Kinder- oder Puppenwagens, oder aber nur zur Anordnung an einem Wagengestell eines Kinder- oder Puppenwagens, wobei die Querverbindung längenveränderlich ausgebildet ist, wenigstens aufweisend einen Scherenmechanismus zur Längenveränderung der Querverbindung und wenigstens zwei Adapteraufnahmen zum lösbaren Befestigen eines Einsatzes.

Mithilfe der Adapteraufnahmen ist der Einsatz, welcher selbst vorteilhaft Adapter aufweist und in den bspw. ein Kind gelegt und/oder gesetzt werden kann, an der Querverbindung und damit am Wagengestell befestigbar. Die Adapter des Einsatzes werden hierbei mit den Adapteraufnahmen der Querverbindung in Wirkverbindung gebracht. Sie können bspw. aufgesteckt und eingeklickt werden. Eine Klickverbindung wird hierbei vorteilhaft über Rastnasen und entsprechende Rastvertiefungen an den Adapteraufnahmen realisiert und entsprechend dazu komplementär an den Adaptern des an die Querverbindung anzubringenden Einsatzes.

Mithilfe des Scherenmechanismus ist es möglich, die Querverbindung in ihrer Länge zu verändern. Mit der Längenveränderung der Querverbindung kann gleichzeitig eine Breitenverstellung des Wagengestells einhergehen, wenn die Querverbindung ein wesentlicher Bestandteil des Wagengestells ist. Es ist hiebei aber denkbar, dass die Querverbindung am Wagengestell so angeordnet ist, dass zwar die Querverbinung veränderbar in Ihrer Länge ist, aber das Kinderwagengestell ünberührt bleibt. Der Scherenmechanismus gibt vorteilhaft die längenverändernde bzw. breitenverändernde Bewegung der längenveränderlichen Querverbindung vor. Hierdurch ist einerseits eine einfache Bedienung der Querverbindung möglich. Andererseits wird einer Fehlbedingung vorgebeugt. Die Längenveränderung der Querverbindung erfolgt intuitiv und wird durch den Scherenmechanismus eindeutig vorgegeben.

Es können aber auch andere mechanische Ausgestaltungen zum Einsatz kommen, welche als Ersatz für den Scherenmechanismus zum Einsatz kommen können, so bspw. Eine Anordnung mit mindestens einen Bautenzug.

Weitere vorteilhafte Ausgestaltungen der Erfindung sind in den auf den Patentanspruch 1 rückbezogenen Patentansprüchen angegeben.

In einer vorteilhaften Ausgestaltung der Querverbindung ist vorgesehen, dass die Querverbindung wenigstens zwei Außenteile und wenigstens ein Mittelteil aufweist, die teleskopartig angeordnet sind, wobei zwischen den wenigstens zwei Außenteilen das wenigstens eine Mittelteil wenigstens zum Teil aufgenommen ist. Die wenigstens zwei Außenteile sind hierbei als Hohlprofil und das wenigstens eine Mittelteil als ein Voll- oder Hohlprofil ausgebildet, wobei das wenigstens eine Mittelteil formschlüssig in die wenigstens zwei Außenteile aufnehmbar ist. Die wenigstens zwei Außenteile lassen sich derart aufeinander zubewegen, dass das wenigstens eine Mittelteil vollständig in ihnen aufgenommen ist. Diese teleskopartige Bewegung, bei welcher die wenigstens zwei Außenteile und das wenigstens eine Mittelteil zusammen- oder auseinandergeschoben werden, bewirkt die Längenveränderung der Querverbindung. Die wenigstens zwei Außenteile und das wenigstens eine Mittelteil sind vorteilhaft aus Kunststoff, Verbundmaterial, Metall oder aus einer Metalllegierung ausgebildet. Hierbei können die wenigstens zwei Außenteile und das wenigstens eine Mitteilteil aus einem Material oder aber auch aus unterschiedlichen Materialien ausgebildet sein.

Es ist denkbar, dass die für die Querverbindung vorgesehenen Profile, d.h**.** Hohlprofil und/oder Vollprofil, neben einer runden Form auch oval oder eckig ausgebildet sein können. Hierunter sind bspw. quaderförmige, quadratische, oder dreieckige Profilformen zu verstehen. Das ist aber nicht beschränkend zu verstehen, sodass auch vieleckige Profile mit regelmäßiger oder unregelmäßiger Profilform vorgesehen sein können. Profil bzw. Profilform meint hier stets die Querschnittsform.

Es ist weiterhin vorteilhaft auch denkbar, dass die Querverbindung wenigstens zwei Außenteile und wenigstens ein Mittelteil aufweist, die teleskopartig angeordnet sind, wobei die wenigstens zwei Außenteile von dem wenigstens einen Mittelteil wenigstens zum Teil aufgenommen sind. Hierbei können die wenigstens zwei Außenteile teleskopartig in das wenigstens eine Mittelteil eingeschoben werden. Es ist weiterhin denkbar, dass in dem wenigstens einen Mittelteil wenigstens ein Federelement angeordnet ist, welches eine symmetrische Kraft auf die wenigstens zwei Außenteile bewirkt, sodass diese stets zu gleichen Teilen in das wenigstens eine Mittelteil eingeschoben bzw. ausgefahren sind.

In einer weiteren vorteilhaften Ausgestaltung der Querverbindung ist vorgesehen, dass die wenigstens zwei Adapteraufnahmen an dem wenigstens einen Mittelteil und/oder jeweils an wenigstens einem der wenigstens zwei Außenteile angeordnet sind. Hierbei sind die Adapteraufnahmen vorteilhaft senkrecht nach oben hin ausgerichtet, sodass ein Einsatz mit seinen Adaptern von oben aufgesteckt werden kann. Bei einer Querverbindung mit zwei Adapteraufnahmen, sind diese vorteilhaft symmetrisch an den wenigstens zwei Außenteilen angeordnet, und zwar jeweils im Bereich der äußeren freien Enden der Außenteile. Hierdurch kann vorteilhaft ein einzelner Einsatz aufgenommen und an der Querverbindung angeordnet werden, wobei der Einsatz durch die Längenveränderung der Querverbindung wiederum in der Breite variierbar ist. Für die Anordnung von zwei Einsätzen nebeneinander an der Querverbindung sind vorteilhaft vier Adapteraufnahmen vorgesehen, wobei zwei Adapteraufnahmen an den wenigstens zwei Außenteilen und zwei vor oder an dem wenigstens einem Mittelteil angeordnet sind. Die beiden Adapteraufnahmen an dem wenigstens einen Mittelteil sind dort wiederum mittig angeordnet. Die anderen zwei Adapteraufnahmen sind jeweils im Bereich der äußeren freien Enden der Außenteile angeordnet. Hierdurch ist es möglich, zwei Einsätze nebeneinander an der Querverbindung und damit an einem Wagengestell für ein Wagengestell eines Kinder- oder Puppenwagens anzuordnen.

Die Adapteraufnahmen können vorteilhaft auf die wenigstens zwei Außenteile bzw. auf das wenigstens eine Mittelteil mittels einer Schnapp- oder Klickverbindung aufgesteckt werden, wobei die wenigstens zwei Außenteile bzw. das wenigstens eine Mittelteil von einer Klammer elastisch umgriffen und an diesen gehalten wird. Es ist aber auch denkbar, dass die Adapteraufnahmen mit den wenigstens zwei Außenteilen bzw. mit dem wenigstens einen Mittelteil fest verbunden sind. Hierbei ist weiterhin denkbar, dass diese einteilig miteinander ausgebildet sind.

In einer weiteren vorteilhaften Ausgestaltung der Querverbindung ist vorgesehen, dass die Querverbindung mithilfe des Scherenmechanismus in wenigstens zwei Positionen arretierbar ausgebildet ist, wobei die erste Position eine Grundposition und die zweite Position eine gegenüber der Grundposition verbreiterte Spreizposition ist. In der Grundposition sind die wenigstens zwei Außenteile und das wenigstens eine Mittelteil der Querverbindung zusammengeschoben. Die Querverbindung weist in dieser Position ihre geringste Längserstreckung auf. Das bedeutet wiederum, dass das Wagengestell für einen Kinder- oder Puppenwagen wiederum seine geringste Breite aufweist. Der Scherenmechanismus ist in dieser Position geschlossen. In dieser Position ist vorteilhaft nur ein Einsatz an der Querverbindung anordenbar. In der Grundposition bildet das Wagengestell durch die Querverbindung in ihrer geringsten Längserstreckung einen Einzelwagen aus, der gegenüber einem Zwillingswagen weniger breit ist.

In der Spreizposition weist die Querverbindung ihre größte Längserstreckung auf. Die wenigstens zwei Außenteile und das wenigstens eine Mittelteil sind auseinandergeschoben. Das Wagengestell mit der Querverbindung weist dadurch seine größte Breite auf. Der Scherenmechanismus ist in dieser Position maximal geöffnet. In dieser Position sind vorteilhaft zwei Einsätze an der Querverbindung anordenbar. Das Wagengestell bildet hierdurch einen Zwillingswagen aus, welcher gegenüber einem Einzelwagen verbreitert ist.

Durch Betätigung des Scherenmechanismus kann zwischen der Grundposition und der Spreizposition hin- und hergewechselt werden. Hierbei muss lediglich der Scherenmechanismus entsprechend geöffnet oder geschlossen werden, was wiederum eine Längenveränderung der Querverbindung und damit eine Verbreiterung bzw. eine Verschmälerung des Wagengestells für einen Kinder- oder Puppenwagen bewirkt.

In einer weiteren vorteilhaften Ausgestaltung der Querverbindung ist vorgesehen, dass die wenigstens zwei Adapteraufnahmen abnehmbar ausgebildet sind. So ist denkbar, dass die am wenigstens einen Mittelteil angeordneten Adapteraufnahmen und/oder die an den wenigstens zwei Außenteilen angeordneten Adapteraufnahmen abnehmbar sind. So können diese je nach Bedarf an der Querverbindung angeordnet oder abgenommen werden. Hierbei ist denkbar, die Adapteraufnahmen über bspw. Ringmuffen an der Querverbindung lösbar jeweils über eine Klick- oder Rastverbindung zu befestigen. Die Adapteraufnahmen können aber auch mit der Querverbindung verschraubt werden. Es ist aber auch denkbar, dass die Ringmuffen, welche die Adapteraufnahmen an der Querverbindung halten, miteinander verschraubt sind.

In einer weiteren vorteilhaften Ausgestaltung der Querverbindung ist vorgesehen, dass die wenigstens zwei Adapteraufnahmen schwenk- und/oder verschiebbar ausgebildet sind. Hierbei können die Adapteraufnahmen um die Längsachse der Querverbindung herum verschwenkt bzw. entlang der Längserstreckung verschoben werden. Die Verschwenkung ist vorteilhaft, da hierdurch die wenigstens zwei Adapteraufnahmen in eine Gebrauchsposition, in welcher sie senkrecht nach oben hin ausgerichtet sind, oder in eine Nicht-Gebrauchsposition, in welcher sie platzsparend weggeschwenkt, d.h**.** um wenigstens 90° waagerecht bis maximal 180° senkrecht nach unten, verbringbar sind.

In der Gebrauchsposition ist wenigstens ein Einsatz mit entsprechenden Adaptern auf die Adapteraufnahmen aufsteck- und lösbar befestigbar. Das Verbringen der wenigstens zwei Adapteraufnahmen ist vorteilhaft, wenn diese in eine platzsparende Position verbracht werden sollen, weil bspw. das Wagengestell mit der Querverbindung zusammengeklappt werden soll, sodass die Adapteraufnahmen nicht mehr senkrecht hervorstehen, sondern in das Wagengestell einschwenkbar sind. Wenn die Querverbindung bspw. vier Adapteraufnahmen aufweist, aber nur zwei genutzt werden sollen, ist es weiterhin vorteilhaft, wenn die zwei ungenutzten Adapteraufnahmen in eine Nicht-Gebrauchsposition verschwenkbar sind, sodass diese einen Einsatz, welcher auf die anderen beiden Adapteraufnahmen in der Gebrauchsposition angeordnet werden soll, nicht blockieren.

In einer weiteren vorteilhaften Ausgestaltung der Querverbindung ist vorgesehen, dass die wenigstens zwei Adapteraufnahmen in wenigstens einer Schwenk- und/oder Verschiebeposition arretierbar ausgebildet sind. Vorteilhaft sind dadurch die wenigstens zwei Adapteraufnahmen auf wenigstens eine bestimmte Position determiniert. Besonders vorteilhaft sind die wenigstens zwei Adapteraufnahmen in ihrer Gebrauchsposition und in ihrer Nicht-Gebrauchsposition arretierbar ausgebildet, sodass diese nur die beiden Positionen - Gebrauchs- und Nicht-Gebrauchsposition - dauerhaft annehmen können. Dadurch sind sie nicht ungewollt aus diesen Positionen verbringbar ausgebildet. Dies erhöht die Sicherheit der Querverbindung und damit des Wagengestells. Gleichzeitig erleichtert die Determination auf bspw. nur zwei Positionen die Bedienbarkeit, da die Adapteraufnahmen nur in eine Gebrauchs- und in eine Nicht-Gebrauchspositionen dauerhaft verbringbar sind. Dies ist insbesondere für eine Verschwenkung der wenigstens zwei Adapteraufnahmen relevant. Bei wenigstens einer arretierbaren Verschiebeposition ist vorteilhaft, dass hierdurch mithilfe der wenigstens zwei Adapteraufnahmen auf der Querverbindung ein fester Abstand zueinander einstellbar ist, sodass wenigstens ein Einsatz mit einer entsprechenden festen Breite sicher und einfach von den wenigstens zwei Adapteraufnahmen aufgenommen werden kann. Vorteilhaft sind für jede Adapteraufnahme zwei unterschiedliche Verschiebepositionen vorgesehen, sodass unabhängig von der Längenveränderung der Querverbindung der Abstand der wenigstens zwei Adapteraufnahmen zueinander veränderbar bzw. anpassbar ausgebildet sind. So ist es nunmehr möglich einerseits durch eine Längenveränderung der Querverbindung die Breite eines Wagengestells zu verändern und gleichzeitig durch Verschieben und Arretieren der wenigstens zwei Adapteraufnahmen deren Abstand zueinander zu verändern bzw. anzupassen, sodass wenigstens ein Einsatz mit einer bestimmten Breite von den Adapteraufnahmen aufgenommen werden kann.

In einer weiteren vorteilhaften Ausgestaltung der Querverbindung ist vorgesehen, dass die wenigstens zwei Außenteile jeweils wenigstens einen Arretierpunkt zur Arretierung einer Adapteraufnahme in der wenigstens einen Schwenk- und/oder Verschiebeposition aufweisen. Hierbei ist denkbar, dass die Arretierpunkte als hervorstehende zylindrische Stifte ausgebildet sind, die sich mit ihrer Längsachse radial zur Oberfläche der Querverbindung nach außen hin erstrecken. Vorteilhaft sind an den wenigstens zwei Adapteraufnahmen entsprechend zu den Arretierpunkten Ausnehmungen mit Rastnasen oder Rastvorsprüngen vorgesehen, die dazu geeignet sind, die wenigstens zwei Adapteraufnahmen an den Arretierpunkten formschlüssig zu befestigen und durch die Rastnasen oder Rastvorsprüngen zu halten. Hierzu werden die wenigstens zwei Adapteraufnahmen an die Arretierpunkte herangeführt und mit leichtem Druck dagegen gepresst, sodass die Arretierpunkte die Rastnase oder Rastvorsprünge überwinden und in die Ausnehmungen formschlüssig eingreifen. Je nachdem, wo die Ausnehmungen an den Adapteraufnahmen angeordnet sind, sind durch formschlüssiges Eingreifen der Arretierpunkte an der Querverbindung verschiedene Schwenk- und/oder Verschiebepositionen vorbestimmbar. Je nachdem, wo die Ausnehmungen an den Adapteraufnahmen angeordnet sind, sind bestimmte Verschwenkungswinkel, wie bspw. 0°, 90° und 180° vorbestimmbar.

Zur besseren Stabilität der in Eingriff gebrachten Adapteraufnahmen an den Arretierpunkten ist es vorteilhaft denkbar, diese paarweise und diametral zueinander an der Querverbindung anzuordnen. Das heißt, die Arretierpunkte bzw. die Stifte, die die Arretierpunkte ausbilden, liegen sich paarweise am Umfang der Querverbindung gegenüber.

Es ist weiterhin denkbar, dass im Bereich der äußeren Enden der Querverbindung mehrere Arretierpunkte angeordnet sind. So können ein Paar sich diametral gegenüberliegende äußere Arretierpunkte und ein weiteres Paar sich diamtral gegenüberliegende innere Arretierpunkte an der Querverbindung vorgesehen sein. Zwischen den inneren und äußeren Arretierpunkten wird jeweils ein Zwischenraum aufgespannt, zwischen dem jeweils eine Adapteraufnahme hin- und herverschiebbar ist. Die jeweilige Adapteraufnahme, die innerhalb eines Zwischenraums angeordnet ist, ist sowohl an den inneren Arretierpunkten als auch an den äußeren Arretierpunkten wahlweise arretierbar. So können die Adapteraufnahmen an der Querverbindung in ihrem Abstand zueinander verändert werden. Hierbei ist der Abstand an die Breite des einzusetzenden Einsatzes anpassbar.

In einer weiteren vorteilhaften Ausgestaltung der Querverbindung ist vorgesehen, dass das wenigstens eine Mittelteil wenigstens einen Arretierpunkt zur Arretierung einer Adapteraufnahme in der wenigstens einen Schwenkposition aufweist. Hierbei ist der wenigstens eine Arretierpunkt analog zu den vorgenannten Arretierpunkten ausgebildet. Gleiches trifft ebenfalls für die Adapteraufnahmen mit entsprechenden Ausnehmungen zu, die mit dem wenigstens einen Arretierpunkt an dem wenigstens einen Mittelteil in Eingriff stehen und damit an der Querverbindung befestigbar sind. Je nachdem, wo die Ausnehmungen an den Adapteraufnahmen angeordnet sind, sind bestimmte Verschwenkungswinkel, wie bspw. 0°, 90° und 180° vorbestimmbar.

In einer weiteren vorteilhaften Ausgestaltung der Querverbindung ist vorgesehen, dass in den wenigstens zwei Außenteilen jeweils ein Federelement aufgenommen ist, welches auf das wenigstens eine Mittelteil von beiden Seiten eine symmetrische Kraftbeaufschlagung zur Zentrierung des wenigstens einen Mittelteils zwischen den wenigstens zwei Außenteilen bewirkt. Beim Verkürzen der Längserstreckung der Querverbindung werden die wenigstens zwei Außenteile aufeinander zubewegt. Hierbei wird das wenigstens eine Mittelteil in die wenigstens zwei Außenteile teleskopartig aufgenommen bzw. eingeschoben. Gleichzeitig werden die Federelemente beim Zusammenschieben der Außenteile gespannt. Durch die symmetrische Anordnung rechts und links von dem wenigstens einen Mittelteil bewirken die Federelemente auch eine symmetrische Kraftbeaufschlagung von beiden Seiten, sodass das wenigstens eine Mittelteil stets mittig zwischen den wenigstens zwei Außenteilen angeordnet ist. Im einfachsten Fall sind die Federelemente als Spiralfedern ausgebildet, die mit einem Ende an dem wenigstens einen Mittelteil anliegen und mit dem gegenüberliegenden Ende an ein innenliegendes Widerlager in den Außenteilen oder am Wagengestell, an dem die Querverbindung angeordnet ist, anliegen. Vorteilhaft bewirken die Federelemente, dass das wenigstens eine Mittelteil in jeder Position der Querverbindung - auch während der Längenveränderung - mittig zwischen den wenigstens zwei Außenteilen angeordnet ist.

In einer weiteren vorteilhaften Ausgestaltung der Querverbindung ist vorgesehen, dass der Scherenmechanismus zwei Hebel in Form eines ersten Hebels und eines zweiten Hebels aufweist. Vorteilhaft sind die Hebel als Flacheisen ausgebildet, wobei sie durch ihre flache Ausgestaltung möglichst wenig Platz beanspruchen. Damit kann der Scherenmechanismus platzsparend an der Querverbindung angeordnet werden. Es ist ebenfalls denkbar, dass der Scherenmechanismus aus einer Metalllegierung, Kunststoff, Verbundwerkstoff oder einer Kombination hieraus ausgebildet ist. Besonders vorteilhaft weisen die Hebel des Scherenmechanismus weiterhin die Form eines Flacheisens auf. Das heißt, die Hebel sind vorteilhaft flach ausgebildet. Weiterhin weisen die Hebel Eigensteifigkeit auf, sodass bei einer Betätigung von Hand diese nicht verformt werden. Hierdurch ist der Scherenmechanismus gemäß seiner Verwendung ausreichend stabil und haltbar ausgebildet.

In einer weiteren vorteilhaften Ausgestaltung der Querverbindung ist vorgesehen, dass der zweite Hebel mit einem Ende an dem ersten Hebel und mit dem anderen Ende an einem der wenigstens zwei Außenteile angelenkt ist und der erste Hebel mit einem Ende an dem anderen der zwei Außenteile angelenkt ist, sodass der Scherenmechanismus durch Umlegen des ersten Hebels geschlossen oder geöffnet werden kann, wodurch wiederum eine Längenveränderung der Querverbindung durch Zusammen- bzw. Auseinanderschieben der wenigstens zwei Außenteile bewirkbar ist.

Der Scherenmechanismus weist in der einfachsten Ausführungsform mit seinen zwei Hebeln im Wesentlichen eine y-Form auf. Die Punkte, in denen die Hebel angelenkt sind, sind vorteilhaft als drehbewegliche Anlenkungspunkte ausgebildet. Die Enden des ersten und des zweiten Hebels, die jeweils an den Außenteilen angelenkt sind, bilden die sich zu öffnende bzw. die sich zu schließende Schere des Scherenmechanismus aus. Diese Enden werden mit Umlegen des ersten Hebels je nach Richtung des Umlegens geöffnet oder geschlossen. Hierbei werden durch die Anlenkung der Enden an die Außenteile selbige auseinander- bzw. zusammengeschoben. Das Umlegen des ersten Hebels erleichtert vorteilhaft die Längenveränderung der Querverbindung. Einerseits ist dadurch ein geringer Kraftaufwand erforderlich, da mithilfe des Scherenmechanismus physikalische Hebelgesetze zur Anwendung kommen, und andererseits gibt der erste Hebel nur zwei Arten der Bewegung vor, die eine Längenänderung der Querverbindung bewirken, und zwar ein Umlegen in eine erste Richtung, die ein Öffnen des Scherenmechanismus und damit ein Auseinanderschieben der wenigstens zwei Außenteile der Querverbindung bewirkt, und ein Umlegen in eine entgegengesetzte Richtung, die ein Schließen des Scherenmechanismus und damit ein Zusammenschieben der wenigstens zwei Außenteile der Querverbindung bewirkt.

In einer weiteren vorteilhaften Ausgestaltung der Querverbindung ist vorgesehen, dass der Scherenmechanismus durch wenigstens zwei Anschlagpunkte am Scherenmechanismus und/oder an der Querverbindung auf die wenigstens zwei Positionen begrenzt und/oder in den wenigstens zwei Positionen arretierbar ist. Hierdurch ist vorteilhaft der Bewegungsraum der Hebel, insbesondere des ersten Hebels begrenzt. Dieser kann durch die zwei Anschlagpunkte maximal in die beiden Positionen verbracht werden, die die Grundposition und die Spreizposition der Querverbindung bewirken. Dadurch ist die Bedienung der Querverbindung, d.h**.** die Verbringung in die Grund- oder Spreizposition intuitiv und einfach für einen Benutzer möglich. Durch die Begrenzung der Bewegung des Scherenmechanismus ist eine Fehlbedienung praktisch ausgeschlossen. Durch die Anschlagpunkte ist die Querverbindung jeweils in der Grundposition und in der Spreizposition arretiert.

Als Anschlagpunkt ist denkbar, dass bspw. der erste und/oder der zweite Hebel einen Vorsprung aufweist, an welchen der erste Hebel und/oder zweite Hebel in der anschlägt und nicht darüber hinaus bewegt werden kann. Weiterhin ist es denkbar, einen Anschlagpunkt als Vorsprung an der Querverbindung, d.h**.** an dem wenigstens einen Mittelteil und/oder an einem der wenigstens zwei Außenteile anzuordnen, an welchem einer der Hebel des Scherenmechanismus in der geöffneten und/oder in der geschlossenen Position anschlagen und hierdurch die Bewegung des Scherenmechanismus begrenzen. Ein konkretes Beispiel für einen Anlenkungspunkt kann der Anlenkungspunkt zwischen ersten Hebel und Außenteil sein, an dem in der geschlossenen Position des Scherenmechanismus der zweite Hebel anschlägt und nicht darüber hinaus bewegt werden kann. Hierdurch ist die geschossene Position des Scherenmechanismus und damit der Grundposition der Querverbindung durch den Anschlagpunkt fest vorgegeben.

Zusätzlich ist es auch denkbar, in den Anschlagpunkten außerdem Rastvorrichtungen vorzusehen, die die Hebel des Scherenmechanismus in der geöffneten und/oder in der geschlossenen Position fixieren und hierdurch eine zusätzliche mechanische Stabilität der Querverbindung gewährleisten.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Ansicht der Querverbindung in einer Spreizposition
- Fig. 2: eine perspektivische Ansicht der Querverbindung in einer Grundposition
- Fig. 3: eine schematische Ansicht von unten auf den Scherenmechanismus der Querverbindung
- Fig. 4a: eine perspektivische Ansicht des Scherenmechanismus in der Grundposition ohne Außenteile und Mittelteil
- Fig. 4b: eine perspektivische Ansicht des Scherenmechanismus in einer Position zwischen Grundposition und Spreizposition ohne Außenteile und Mittelteil
- Fig. 4c: eine perspektivische Ansicht des Scherenmechanismus in der Spreizposition ohne Außenteile und Mittelteil
- Fig. 5a: eine perspektivische Ansicht des Scherenmechanismus in der Grundposition ohne Außenteile und Mittelteil mit verlängertem ersten Hebel und verlängertem zweiten Hebel
- Fig. 5b: eine perspektivische Ansicht des Scherenmechanismus in der Spreizposition ohne Außenteile und Mittelteil mit verlängertem ersten Hebel und verlängertem zweiten Hebel

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

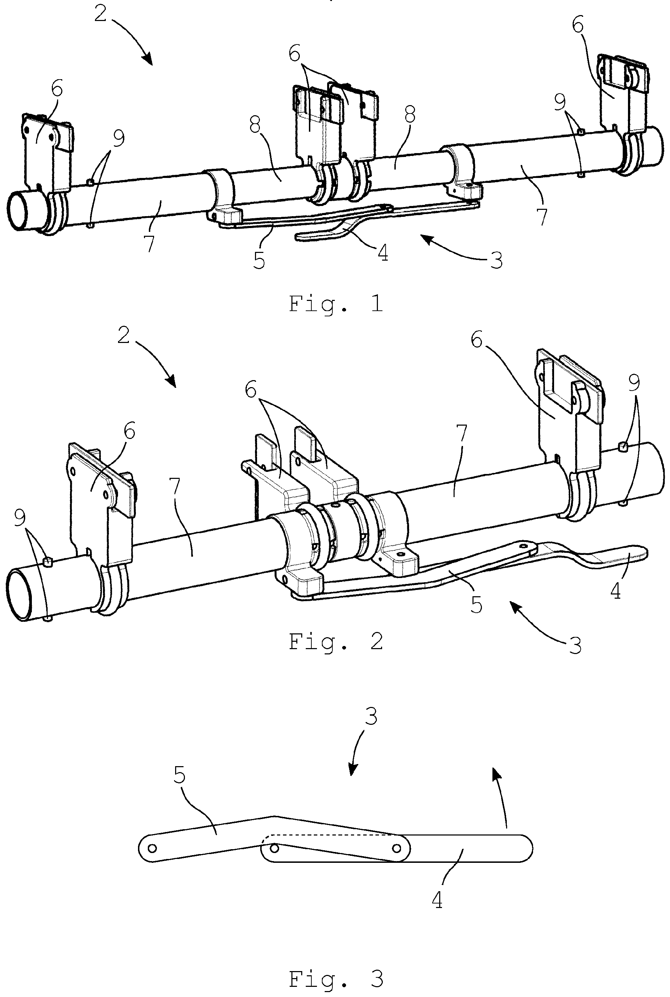

Fig. 1 zeigt eine perspektivische Ansicht der Querverbindung 2 in einer Spreizposition, in welcher sie ihre maximale Längserstreckung aufweist. Die Querverbindung 2 weist in der gezeigten Ausführungsform ein Mittelteil 8 und zwei Außenteile 7 auf, wobei das Mittelteil 8 zwischen den beiden Außenteilen 7 angeordnet ist und von diesen zum Teil teleskopisch aufgenommen ist. Hierdurch lässt sich die Querverbindung 2 zusammen- und auseinanderschieben, wobei das Mittelteil 8 und die Außenteile 7 ineinander- bzw. auseinander geschoben werden. In der gezeigten Spreizposition weist die Querverbindung 2 ihre größte Längserstreckung auf.

Unterhalb der Querverbindung 2 ist ein geöffneter Scherenmechanismus 3 bestehend aus einem ersten Hebel 4 und einem zweiten Hebel 5 angeordnet. Ein Ende des zweiten Hebels 5 ist an dem zum Mittelteil 8 zugewandten Ende eines Außenteils 7 angelenkt. Das gegenüberliegende Ende des zweiten Hebels 5 ist im Bereich der Mitte des ersten Hebels 4 angeordnet. Ein Ende des ersten Hebels 4 ist an dem zum Mittelteil 8 zugewandten Ende des anderen Außenteils 7 angelenkt. Das gegenüberliegende Ende des ersten Hebels 4 ist freistehend. Es kann von einem Benutzer gegriffen und entsprechend der Anlenkung des ersten Hebels 4 an dem einen Außenteil 7 bewegt bzw. um dessen Anlenkung herum umgelegt werden. Dabei kann der Scherenmechanismus 3 geschlossen oder umgekehrt geöffnet werden, was die Querverbindung 2 zusammenschieben bzw. auseinanderschieben würde. In der gezeigten Ausführungsform ist der Scherenmechanismus 3 geöffnet, sodass die beiden Enden der Hebel, die an den Außenteilen 7 angelenkt sind, voneinander wegzeigen und ihren größten Abstand zueinander aufweisen. Das freie Ende des ersten Hebels 4 zeigt hierbei in Richtung des Anlenkungspunkts zwischen Außenteil 7 und zweitem Hebel 5**.**

Die Querverbindung 2 weist weiterhin vier Adapteraufnahmen 6 auf, wobei zwei Adapteraufnahmen 6 mittig am Mittelteil 8 und jeweils eine Adapteraufnahme 6 im Bereich der äußeren Enden der beiden Außenteile 7 angeordnet sind. Alle vier Adapteraufnahmen 6 sind senkrecht nach oben hin ausgerichtet. Sie umschließen mit einem Teil ringförmig die Außenteile 7 bzw. das Mittelteil 8 und sind gleichzeitig an diesen verschiebbar und schwenkbar ausgebildet.

Weiterhin sind an den beiden Außenteilen 7 jeweils vier Arretierpunkte 9 in Form von radial nach außen abstehenden Stiften angeordnet. Sie sind paarweise diametral zueinander angeordnet. In der gezeigten Ausführungsform sind jeweils zwei Paar der Arretierpunkte 9 an jedem der Außenteile 7 angeordnet, wobei jeweils ein Paar an jedem Außenteil 7 von der jeweils dort angeordneten Adapteraufnahme 6 verdeckt wird.

Das Mittelteil 8 weist ebenfalls Arretierpunkte 9 auf. Am Mittelteil 8 sind mittig zwei Paar Arretierpunkte 9 angeordnet. In der gezeigten Ausführungsform sind sie jedoch nicht zu sehen, da sie von den beiden mittig angeordneten Adapteraufnahmen 6 verdeckt werden.

Die Adapteraufnahmen 6 sind über Ausnehmungen an den Arretierpunkten 9 befestigbar. Im Bereich der nach außen gerichteten Enden der Außenteile 7 sind die jeweiligen Adapteraufnahmen 6 zwischen den dort angeordneten Arretierpunkten 6 verschiebbar. In der gezeigten Ausführung sind die beiden äußeren Adapteraufnahmen 6 an den äußersten Arretierpunkten 9 der Außenteile 7 befestigt. Sie verdecken gleichzeitig die genannten äußersten Arretierpunkte 9.

Die Adapteraufnahmen 6 sind in der gezeigten Konfiguration geeignet, zwei Einsätze aufzunehmen und nebeneinander an der Querverbindung 2 anzuordnen. Die Querverbindung 2 als Teil eines Wagengestells für einen Kinder- oder Puppenwagen bildet diesen in der Spreizposition als Zwillingswagen aus.

Fig. 2 zeigt eine perspektivische Ansicht der Querverbindung 2 in einer Grundposition. Die hier gezeigte Querverbindung 2 entspricht der Querverbindung 2 aus Fig. 1 in der zur Spreizposition entgegengesetzten Grundposition, in welcher sie ihre geringste Längserstreckung aufweist. Die beiden Außenteile 7 sind vollständig zusammengeschoben, sodass das Mittelteil 8 vollständig von den Außenteilen 7 aufgenommen und dadurch nicht mehr zu sehen ist. Die beiden mittleren Adapteraufnahmen 9 sind um 90° verschwenkt und sind nunmehr waagerecht ausgerichtet und zeigen vom Betrachter aus weg. Sie geben dadurch den mittleren Bereich oberhalb der Querverbindung 2 frei. Die beiden Adapteraufnahmen 6 an den Außenteilen 7 sind weiterhin senkrecht nach oben hin ausgerichtet und gleichzeitig von den äußeren Arretierpunkten 9 zu den weiter in Richtung Mitte der Querverbindung angeordneten Arretierpunkten 9 verschoben und an diesen befestigt. Dementsprechend sind diese Arretierpunkte 9 von den Adapteraufnahmen 6 verdeckt. Es sind nunmehr die zum äußeren Ende der jeweiligen Außenteile 7 hin angeordneten Arretierpunkte 9 zu sehen.

Der Scherenmechanismus 3 ist in der Grundposition der Querverbindung 2 geschlossen. Hierbei zeigen sowohl der erste Hebel 4 als auch der zweite Hebel 5 in die aus Fig. 1 gezeigte entgegengesetzte Richtung. Die Enden der Hebel, die an den Außenteilen 7 angelenkt sind, weisen ihren geringsten Abstand zueinander auf und bewirken hierdurch die Grundposition der Querverbindung 2. Gleichzeitig liegt bzw. schlägt der zweite Hebel 5 an den Anlenkungspunkt zwischen Außenteil 7 und erstem Hebel 4 an. Hierdurch wird die Bewegung des zweiten Hebels 5 und damit verbunden auch des gesamten Scherenmechanismus 3 begrenzt. Der Scherenmechanismus 3 lässt sich nicht über die geschlossene Position hinaus bewegen.

Fig. 3 zeigt eine schematische Ansicht von unten auf den Scherenmechanismus 3 der Querverbindung 2 mit erstem Hebel 4 und zweitem Hebel 5, welche bereits in Fig. 1 und in Fig. 2 gezeigt ist. Der gezeigte Scherenmechanismus 3 befindet sich in der geschlossenen Position.

Die Besonderheit des Scherenmechanismus 3 liegt in der Ausgestaltung des zweiten Hebels 5. Dieser liegt in der geschlossenen Position des Scherenmechanismus 3 an dem ersten Hebel 4, genauer an den Anlenkungspunkt zwischen ersten Hebel 4 und Außenteil 7 (hier nicht gezeigt) an. Hierzu ist der zweite Hebel 5 v-förmig ausgebildet. Die innere Kerbe der v-Form liegt an dem genannten Anlenkungspunkt des ersten Hebels 4 an, sodass die Bewegungsrichtung des zweiten Hebels 5 und damit des gesamten Scherenmechanismus 3 begrenzt ist. Alle Anlenkungspunkte der beiden Hebel liegen fluchtend auf einer gedachten Gerade. Hierdurch erlangt der Scherenmechanismus 3 Stabilität. Die beiden Enden der Hebel, die jeweils an den Außenteilen 7 angelenkt sind, können in der fluchtenden Ausrichtung der Anlenkungspunkte nicht durch Kraftbeaufschlagung an diesen Enden bewegt werden. Der Scherenmechanismus 3 bleibt in dieser geschlossenen Position stabil. Gleiches gilt ebenfalls auch für die geöffnete Position, in der die Anlenkungspunkte des Scherenmechanismus 3 ebenfalls fluchtend auf einer gedachten Geraden angeordnet sind. Diese Anordnung bewirkt gleichzeitig die Arretierung der Querverbindung 2 (hier ebenfalls nicht gezeigt) sowohl in der Grundposition, in der der Scherenmechanismus 3 geschlossen ist, als auch in der Spreizposition, in der der Scherenmechanismus 3 geöffnet ist.

Statt einer V-Form kann der zweite Hebel auch bogenförmig ausgebildet sein, sofern die Anlenkungspunkte in der gezeigten geschlossenen Position des Scherenmechanismus 3 fluchtend auf einer gedachten Geraden angeordnet sind und der zweite Hebel 5 mit seiner Innenseite der Bogenform an den Anlenkungspunkt zwischen ersten Hebel 4 und Außenteil 7 anliegt.

Zum Verbringen des Scherenmechanismus 3 aus der geschlossenen Position in eine geöffnete Position, die gleichzeitig die Spreizposition der Querverbindung bewirkt, muss das freie Ende des ersten Hebels 4 in Richtung des gezeigten Richtungspfeils um 180° um seinen Anlenkungspunkt am gegenüberliegenden Ende herumbewegt bzw. umgelegt werden.

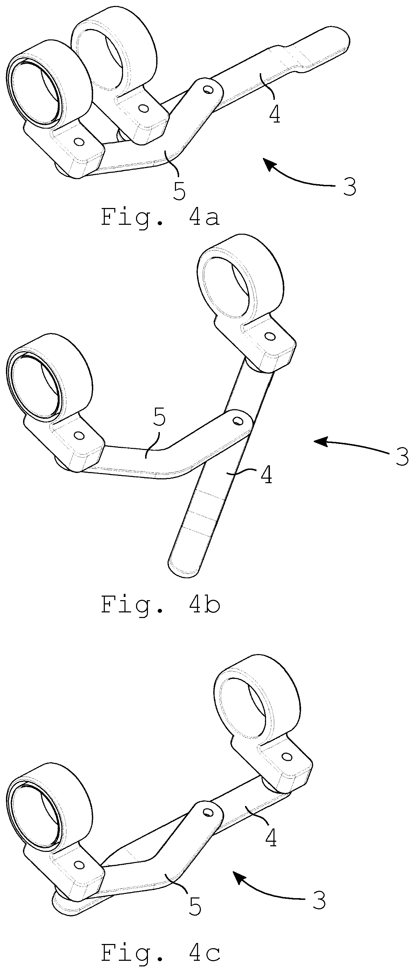

Fig. 4a zeigt eine perspektivische Ansicht des Scherenmechanismus 3 in der Grundposition ohne Außenteile 7 und Mittelteil 8. An den Enden des ersten Hebels 4 und des zweiten Hebels 5 sind jeweils zwei ringförmige Anschlussteile zur Kopplung an die beiden Außenteile 7 (siehe Fig. 1 und 2, hier nicht gezeigt) angeordnet. Die beiden Hebel 4, 5 sind hierbei drehbeweglich an den ringförmigen Anschlussteilen befestigt bzw. angelenkt. Der zweite Hebel 5 weist einen leichten Knick auf, gleichzeitig stößt der zweite Hebel 5 im Knickpunkt an den Anlenkungspunkt zwischen ersten Hebel 4 und ringförmigen Anschlussteil an. Die Anlenkungspunkte der beiden Hebel 4, 5 sind in dieser Position fluchtend zueinander angeordnet.

Fig. 4b zeigt eine perspektivische Ansicht des Scherenmechanismus 3 in einer Position zwischen Grundposition und Spreizposition ohne Außenteile 7 und Mittelteil 8. Fig. 4b entspricht der Fig. 4a mit halbgeöffnetem Scherenmechanismus 3. Der erste Hebel 4 ist um ca. 120° um den Anlenkungspunkt mit dem ringförmigen Anschlussteil am äußeren Ende des Hebels herumverschwenkt. Durch die gleichzeitige Anlenkung des ersten Hebels 4 an den zweiten Hebel 5 wird hierdurch bewirkt, dass sich die äußeren Enden der Hebel 4, 5 und dadurch auch die beiden daran angelenkten ringförmigen Anschlussteile voneinander wegbewegen. Der Abstand zwischen den Enden der Hebel 4, 5 und damit auch der ringförmigen Anschlussteile wird vergrößert.

Fig. 4c zeigt eine perspektivische Ansicht des Scherenmechanismus 3 in der Spreizposition ohne Außenteile 7 und Mittelteil 8. Es ist der Scherenmechanismus 3 gezeigt, der ebenfalls in unterschiedlichen Positionen in den Fig. 4a und 4b gezeigt ist. In dieser Position weisen die Enden des ersten Hebels 4 und des zweiten Hebels 5 sowie die daran angelenkten ringförmigen Anschlussteile ihren größten Abstand zueinander auf. Der erste Hebel 4 ist gleichzeitig um 180° im Vergleich zur Position in Fig. 4a verschwenkt. Die Anlenkungspunkte an den beiden Hebeln 4, 5 sind in dieser Position wieder fluchten zueinander angeordnet.

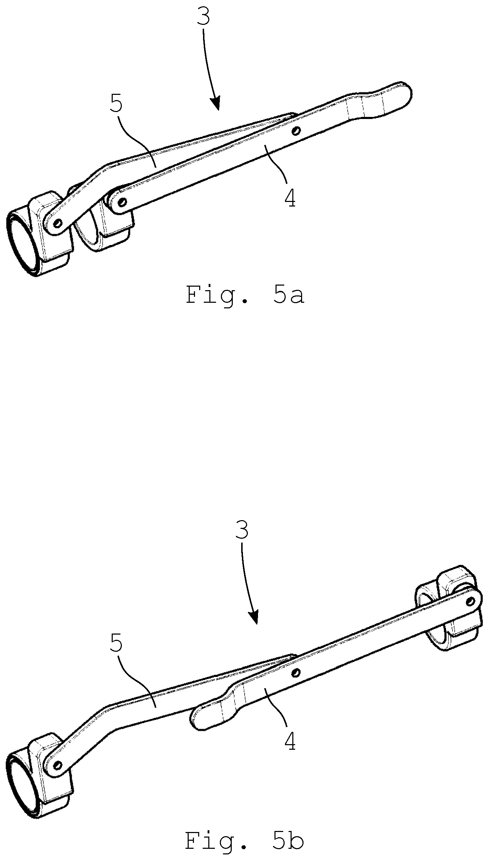

In der Fig. 5a und Fig. 5b ist jeweils eine perspektivische Ansicht des Scherenmechanismus 3 ohne Außenteile 7 und Mittelteil 8 mit verlängertem ersten Hebel 4 und verlängertem zweiten Hebel 5 gezeigt. Fig. 5a zeigt hierbei den Scherenmechanismus 3 in der Grundposition und Fig. 5b den Scherenmechanismus 3 in der Spreizposition. Im Unterschied zu den in den vorherigen Figuren gezeigtem Scherenmechanismus 3 sind hier erster Hebel 4 und zweiter Hebel 5 länger ausgeführt. Hierdurch ist die maximale Breite in der Spreizposition entsprechend der längeren Hebel 4, 5 größer. Dadurch ist es möglich, eine größere Längenänderung der Querverbindung 2 (hier nicht gezeigt) durch Öffnen und Schließen des Scherenmechanismus 3 zu bewirken.

### Bezugszeichenliste

- 2: Querverbindung
- 3: Scherenmechanismus
- 4: erster Hebel
- 5: zweiter Hebel
- 6: Adapteraufnahme
- 7: Außenteil
- 8: Mittelteil
- 9a: innerer Arretierpunkt
- 9b: äußerer Arretierpunkt

## Patentansprüche

1. Querverbindung zur variablen Breitenverstellung für ein Wagengestell eines Kinder- oder Puppenwagens, oder zur Anordnung an einem Wagengestell eines Kinder- oder Puppenwagens, wobei die Querverbindung (2) längenveränderlich ausgebildet ist, wenigstens aufweisend einen Scherenmechanismus (3) zur Längenveränderung der Querverbindung (2) und wenigstens zwei Adapteraufnahmen (6) zum lösbaren Befestigen eines Einsatzes (10) **dadurch gekennzeichnet, dass** die Querverbindung (2) wenigstens zwei Außenteile (7) und wenigstens ein Mittelteil (8) aufweist, die teleskopartig angeordnet sind, wobei zwischen den wenigstens zwei Außenteilen (7) das wenigstens eine Mittelteil (8) wenigstens zum Teil aufgenommen ist oder die wenigstens zwei Außenteile (7) von dem wenigstens einen Mittelteil (8) wenigstens zum Teil aufgenommen sind, wobei in dem wenigstens einen Mittelteil wenigstens ein Federelement angeordnet ist, welches eine symmetrische Kraft auf die wenigstens zwei Außenteile bewirkt, sodass diese stets zu gleichen Teilen in das wenigstens eine Mittelteil eingeschoben bzw. ausgefahren sind.

2. Querverbindung nach Patentanspruch 1, **dadurch gekennzeichnet, dass** die wenigstens zwei Adapteraufnahmen (6) an dem wenigstens einen Mittelteil (8) und/oder jeweils an wenigstens einem der wenigstens zwei Außenteile (7) angeordnet sind.

3. Querverbindung nach Patentanspruch 1, **dadurch gekennzeichnet, dass** die Querverbindung (2) mithilfe des Scherenmechanismus (3) in wenigstens zwei Positionen arretierbar ausgebildet ist, wobei die erste Position eine Grundposition und die zweite Position eine gegenüber der Grundposition verbreiterte Spreizposition ist.

4. Querverbindung nach Patentanspruch 1, **dadurch gekennzeichnet, dass** die wenigstens zwei Adapteraufnahmen (6) abnehmbar ausgebildet sind.

5. Querverbindung nach Patentanspruch 1, **dadurch gekennzeichnet, dass** die wenigstens zwei Adapteraufnahmen (6) schwenk- und/oder verschiebbar ausgebildet sind.

6. Querverbindung nach Patentanspruch 5, **dadurch gekennzeichnet, dass** die wenigstens zwei Adapteraufnahmen (6) in wenigstens einer Schwenk- und/oder Verschiebeposition arretierbar ausgebildet sind.

7. Querverbindung nach Patenanspruch 1 und 6, **dadurch gekennzeichnet, dass** die wenigstens zwei Außenteile (7) jeweils wenigstens einen Arretierpunkt (9a; 9b) zur Arretierung einer Adapteraufnahme (6) in der wenigstens einen Schwenk- und/oder Verschiebeposition aufweisen.

8. Querverbindung nach Patentanspruch 1 und 6, **dadurch gekennzeichnet, dass** das wenigstens eine Mittelteil (8) wenigstens einen Arretierpunkt zur Arretierung einer Adapteraufnahme (6) in der wenigstens einen Schwenkposition aufweist.

9. Querverbindung nach Patentanspruch 1, **dadurch gekennzeichnet, dass** der Scherenmechanismus (3) zwei Hebel in Form eines ersten Hebels (4) und eines zweiten Hebels (5) aufweist.

10. Querverbindung nach Patentanspruch 1 und 9, **dadurch gekennzeichnet, dass** der zweite Hebel (5) mit einem Ende an dem ersten Hebel (4) und mit dem anderen Ende an einem der wenigstens zwei Außenteile (7) angelenkt ist und der erste Hebel (4) mit einem Ende an dem anderen der zwei Außenteile (7) angelenkt ist, sodass der Scherenmechanismus (3) durch Umlegen des ersten Hebels (4) geschlossen oder geöffnet werden kann, wodurch wiederum eine Längenveränderung der Querverbindung (2) durch Zusammen- bzw. Auseinanderschieben der wenigstens zwei Außenteile (7) bewirkbar ist.

11. Querverbindung nach Patentanspruch 3, **dadurch gekennzeichnet, dass** der Scherenmechanismus (3) durch wenigstens zwei Anschlagpunkte am Scherenmechanismus (3) und/oder an der Querverbindung (2) auf die wenigstens zwei Positionen begrenzt und/oder in den wenigstens zwei Positionen arretierbar ist.

## Claims

1. Cross-connector for the variable width adjustment of a stroller frame for a stroller for babies or dolls, or for attachment to a stroller frame for a stroller for babies or dolls, wherein the cross-connector (2) is designed to be variable in length, at least comprising one scissor mechanism (3) for changing the length of the cross-connector (2) and at least two adapter receptacles (6) for the detachable attachment of an insert (10) **characterized in that** the cross-connector (2) has at least two outer parts (7) and at least one middle part (8), which are arranged in a telescopic manner, the at least one middle part (8) being at least partly mounted between the at least two outer parts (7) or the at least two outer parts (7) are at least partly received by the at least one middle part (8), wherein at least one spring element is arranged in the at least one middle part (8), which spring element exerts a symmetrical force on the at least two outer parts (7), so that these are always inserted or extended into the at least one middle part (8) in equal parts.

2. Cross-connector according to patent claim 1, **characterized in that** the at least two adapter receptacles (6) are arranged on the at least one middle part (8) and/or on at least one of the at least two outer parts (7).

3. Cross-connector according to patent claim 1, **characterized in that** the cross-connector (2) is designed to be lockable in at least two positions by means of the scissor mechanism (3), the first position being a basic position and the second position being an expanded position that is wider than the basic position.

4. Cross-connector according to patent claim 1, **characterized in that** the at least two adapter receptacles (6) are designed to be removable.

5. Cross-connector according to patent claim 1, **characterized in that** the at least two adapter receptacles (6) are designed to be pivotable and/or displaceable.

6. Cross-connector according to patent claim 5, **characterized in that** the at least two adapter receptacles (6) are designed to be lockable in at least one pivoted and/or displaced position.

7. Cross-connector according to patent claims 1 and 6, **characterized in that** the at least two outer parts (7) each have at least one locking point (9a; 9b) for locking an adapter receptacle (6) in the at least one pivoted and/or displaced position.

8. Cross-connector according to patent claim 1 and 6, **characterized in that** the at least one middle part (8) has at least one locking point for locking an adapter receptacle (6) in the at least one pivoted position.

9. Cross-connector according to patent claim 1, **characterized in that** the scissor mechanism (3) has two levers in the form of a first lever (4) and a second lever (5).

10. Cross-connector according to patent claims 1 and 9, **characterized in that** the second lever (5) is hinged at one end to the first lever (4) and at the other end to one of the at least two outer parts (7), and the first lever (4) is hinged at one end to the other of the two outer parts (7), so that the scissor mechanism (3) can be opened or closed by turning the first lever (4), which in turn allows a change in length of the cross-connector (2) by pushing the at least two outer parts (7) together or pushing them apart.

11. Cross-connector according to patent claim 3, **characterized in that** the scissor mechanism (3) is limited to the at least two positions and/or can be locked in the at least two positions by at least two anchor points on the scissor mechanism (3) and/or on the cross-connector (2).

## Revendications

1. Liaison transversale pour le réglage en largeur variable d'un châssis de voiture d'une voiture d'enfant ou de poupée, ou pour l'agencement sur un châssis de voiture d'une voiture d'enfant ou de poupée, la liaison transversale (2) étant réalisée de manière à pouvoir être modifiée en longueur, présentant au moins un mécanisme à ciseaux (3) pour la modification en longueur de la liaison transversale (2) et au moins deux logements d'adaptateur (6) pour la fixation amovible d'un insert (10), **caractérisée en ce que** la liaison transversale (2) présente au moins deux parties extérieures (7) et au moins une partie centrale (8), qui sont agencées de manière télescopique, l'au moins une partie centrale (8) étant reçue au moins en partie entre les au moins deux parties extérieures (7) ou les au moins deux parties extérieures (7) étant reçues au moins en partie par l'au moins une partie centrale (8), au moins un élément de ressort étant agencé dans l'au moins une partie centrale, lequel provoque une force symétrique sur les au moins deux parties extérieures, de telle sorte que celles-ci sont toujours insérées dans l'au moins une partie centrale ou déployées de celle-ci à parts égales.

2. Liaison transversale selon la revendication 1, **caractérisée en ce que** les au moins deux logements d'adaptateur (6) sont agencés sur l'au moins une partie centrale (8) et/ou respectivement sur au moins une des au moins deux parties extérieures (7).

3. Liaison transversale selon la revendication 1, **caractérisée en ce que** la liaison transversale (2) est réalisée de manière à pouvoir être bloquée dans au moins deux positions à l'aide du mécanisme à ciseaux (3), la première position étant une position de base et la deuxième position étant une position d'écartement élargie par rapport à la position de base.

4. Liaison transversale selon la revendication 1, **caractérisée en ce que** les au moins deux logements d'adaptateur (6) sont réalisés sous forme amovible.

5. Liaison transversale selon la revendication 1, **caractérisée en ce que** les au moins deux logements d'adaptateur (6) sont réalisé de manière à pouvoir pivoter et/ou coulisser.

6. Liaison transversale selon la revendication 5, **caractérisée en ce que** les au moins deux logements d'adaptateur (6) sont réalisés de manière à pouvoir être bloqués dans au moins une position de pivotement et/ou de coulissement.

7. Liaison transversale selon les revendications 1 et 6, **caractérisée en ce que** les au moins deux parties extérieures (7) présentent chacune au moins un point de blocage (9a ; 9b) pour bloquer un logement d'adaptateur (6) dans l'au moins une position de pivotement et/ou de coulissement.

8. Liaison transversale selon les revendications 1 et 6, **caractérisée en ce que** l'au moins une partie centrale (8) présente au moins un point de blocage pour bloquer un logement d'adaptateur (6) dans l'au moins une position de pivotement.

9. Liaison transversale selon la revendication 1, **caractérisée en ce que** le mécanisme de ciseaux (3) comprend deux leviers sous la forme d'un premier levier (4) et d'un deuxième levier (5).

10. Liaison transversale selon les revendications 1 et 9, **caractérisée en ce que** le deuxième levier (5) est articulé à une extrémité sur le premier levier (4) et à l'autre extrémité sur l'une des au moins deux parties extérieures (7), et le premier levier (4) est articulé à une extrémité sur l'autre des deux parties extérieures (7), de telle sorte que le mécanisme de ciseaux (3) peut être fermé ou ouvert en déplaçant le premier levier (4), ce qui permet à son tour une modification en longueur de la liaison transversale (2) en rapprochant ou en éloignant les au moins deux parties extérieures (7).

11. Liaison transversale selon la revendication 3, **caractérisée en ce que** le mécanisme de ciseaux (3) est limité aux au moins deux positions par au moins deux points de butée sur le mécanisme à ciseaux (3) et/ou sur la liaison transversale (2) et/ou peut être bloqué dans les au moins deux positions.
